# EUROPEAN PATENT SPECIFICATION

(11) **EP 2 278 147 B1**
(45) Date of publication and mention of the grant of the patent: **25.06.2014**
(21) Application number: 10005250.5
(22) Date of filing: 19.05.2010
(51) Int. Cl.: F02K 1/06, F02K 1/08, F02K 1/12, F02K 1/15, F02K 3/06, F02K 1/32, F02K 1/52, F02K 1/64, F02K 1/68, F02K 1/72

(54) **Translating variable area fan nozzle providing an upstream bypass flow exit**
Flachstrahldüse mit Umsetzung verschiedener Bereiche, die einen stromaufwärtigen Nebenstromaustritt bereitstellt
Modulation de buse de ventilation à fente variable fournissant une sortie de dérivation d'écoulement en amont

(30) Priority: 16.06.2009 US 485551
(43) Date of publication of application: 26.01.2011
(73) Proprietor: Rohr, Inc., Chula Vista, CA 91910-2098 (US)
(72) Inventor: Amkraut, Daniel, San Diego, California 92115 (US); Layland, Michael John, Bonita, California 91902 (US); James, Norman John, San Diego, California 92107-4039 (US)
(74) Representative: Leckey, David Herbert

(56) References cited:
- EP-A2- 1 878 904
- EP-A2- 2 050 948
- WO-A1-2008/045056
- GB-A- 925 010
- GB-A- 2 285 020

## Description

### TECHNICAL FIELD

The present invention generally relates to gas turbine aircraft engines, and particularly relates to a translating variable area nozzle assembly for a turbofan aircraft engine for use in selectively controlling the fan bypass flow exhausted from the engine in order to adjust the engine's performance under varying flight conditions.

### BACKGROUND

Typical aircraft turbofan jet engines include a fan that draws and directs a flow of air into a nacelle and into and around an engine core. The nacelle surrounds the engine core and helps promote the laminar flow of air around the core. The flow of air that is directed into the engine core is initially passed through a compressor that increases the air flow pressure, and then through a combustor where the air is mixed with fuel and ignited. The combustion of the fuel and air mixture causes a series of turbine blades at the rear of the engine core to rotate, and to drive the engine's rotor and fan. The high-pressure exhaust gases from the combustion of the fuel and air mixture are thereafter directed through an exhaust nozzle at the rear of the engine.

Bypass flow is air that is directed around the engine core. In turbofan engines, the bypass flow typically provides the main thrust for an aircraft. The bypass flow also can be used to help slow a landed aircraft. Thrust reversers mounted in the nacelle structure selectively reverse the direction of the bypass flow to generate reverse thrust. During normal engine operation, the bypass flow may or may not be mixed with the engine core exhaust before exiting the engine assembly.

Several turbofan engine parameters are important to optimize design characteristics and performance. An engine's bypass ratio (BPR) is the ratio of the air mass that passes through the engine's fan duct to that passing through the engine core. Higher BPR engines can be more efficient and quiet than lower BPR engines. In general, a higher BPR results in lower average exhaust velocities and less jet noise at a specific thrust rating. A turbofan engine's performance is also affected by the engine's fan pressure ratio (FPR). FPR is the ratio of the air pressure at the engine's fan nozzle exit to the pressure of the air entering the fan. The lower the FPR, the lower the exhaust velocity, and the higher an engine's propulsive efficiency. Reducing an engine's FPR can reach a practical limit, however, as a low FPR can cause engine fan stall, blade flutter or compressor surge under certain operating conditions.

One solution to these problems includes varying the fan nozzle exit area of a high-BPR engine during operation to optimize engine performance under various flight conditions. By selectively varying the fan nozzle's exit area, an engine's bypass flow characteristics can be adjusted to match a particular flight condition. Unfortunately, prior variable area nozzle systems typically have been heavy, expensive and somewhat complex in their structure and operation, and generally require the coordinated movement of multiple components that employ complex drive mechanisms. EP2050948 discloses a gas turbine assembly with a variable area nozzle and a method of controlling the nozzle.

Accordingly, a need exists for a variable area nozzle assembly for turbofan aircraft engine that promotes a cost effective, simple and efficient operation for control of engine output under certain flight conditions.

### SUMMARY

In one embodiment, a variable area fan nozzle assembly for a turbofan engine includes a nacelle having an aft edge and a translating nozzle segment having a forward edge and a first end that defines the circumferential extent of the segment. The nozzle segment is movably disposed behind the aft edge such that an upstream bypass flow exit is defined between the aft edge and the forward edge when the nozzle segment is in a deployed position. A deflector is disposed between the aft edge and the forward edge, occupying an end portion of the bypass flow exit proximate to the first end. The deflector thereby substantially prevents bypass flow from exiting the upstream bypass flow exit through the end portion.

The nacelle may have a centreline, and can include a forward nacelle portion having an outer fairing and a trailing edge. The assembly can further include a split beavertail fairing having an upstream fairing portion on the outer fairing of the forward nacelle portion and a downstream fairing portion on the first end of at least one nozzle segment. When the nozzle segment is in its stowed position, the upstream fairing portion and the downstream fairing portion can combine to form a substantially continuous outer surface extending between the forward nacelle portion and the nozzle segment.

Another embodiment includes a variable area fan nozzle assembly for a turbofan engine assembly having a primary bypass flow exit for discharging engine bypass flow.

The assembly can include a forward nacelle portion having a trailing edge and a translating nozzle segment having a leading edge and a first end. The assembly also can include support means for movably supporting the first end of the translating nozzle segment such that the nozzle segment is movable between a stowed position and a deployed position. An upstream bypass flow exit can be formed between the leading edge and the trailing edge when the nozzle segment is in the deployed position. A fairing can at least partially cover the support means. The assembly can further include means for substantially preventing air from passing through the upstream bypass flow exit in a region proximate to the fairing.

The foregoing and other features, aspects, and advantages of the invention will be apparent from a reading of the following detailed description together with the accompanying drawings, which are briefly described below.

### BRIEF DESCRIPTION OF THE DRAWINGS

According to common practice, the various features of the drawings discussed below are not necessarily drawn to scale. Dimensions of various features and elements in the drawings may be expanded or reduced to more clearly illustrate the embodiments of the invention.

**FIG. 1** is a perspective view of an aircraft engine having a cascade-type thrust reverser and a translating variable area fan nozzle assembly.

**FIG. 2** is a longitudinal cross section of the aircraft engine shown in FIG.1.

**FIG. 3** is a rear elevation of the aircraft engine shown in FIGS. 1-2.

**FIG. 4** is a perspective view of the thrust reverser and translating variable fan area nozzle assembly portions of the aircraft engine shown in FIGS. 1-3 with a thrust reverser sleeve in a stowed position, and a variable area fan nozzle ring in a deployed position.

**FIG. 5** is a perspective view of the thrust reverser and translating variable area fan nozzle assembly shown in FIG. 4 with both the thrust reverser sleeve and the variable area fan nozzle ring in deployed positions.

**FIG. 6** is an exploded perspective view of the thrust reverser and translating variable area fan nozzle assembly shown in FIGS. 4-5.

**FIG. 7** is a cross sectional view of a guide structure for movably supporting a thrust reverser sleeve and a variable area fan nozzle ring.

**FIG. 8** is a cross sectional view of the thrust reverser and variable area nozzle assembly shown in FIGS. 1-6.

**FIG. 9A** is a perspective view of a variable area fan nozzle assembly for use with an aircraft engine having no cascade-type thrust reverser with a translating nozzle ring in a stowed position.

**FIG. 9B** is a perspective view of the variable area fan nozzle assembly shown in FIG. 9A with the translating nozzle ring in a deployed position.

**FIG. 10** is a perspective view of a portion of the variable area fan nozzle assembly shown in FIGS. 9A-9B with the translating nozzle ring in a deployed position.

**FIG. 11** is a side elevation view of a portion of the variable area fan nozzle assembly shown in FIGS. 9A-9B with the translating nozzle ring in a deployed position.

**FIG. 12** is a perspective view of a portion of one embodiment of a variable area fan nozzle assembly according to the invention with a translating ring segment in a stowed position.

**FIG. 13** is a perspective view of the portion of the variable area fan nozzle assembly shown in FIG. 12 with the translating ring segment in a deployed position..

**FIG. 14** is an enlarged perspective view of the deployed translating ring segment shown in FIG. 13.

**FIG. 15** is cross section of the variable area fan nozzle assembly shown in FIGS. 12-14 taken along line 15-15 in FIG. 12.

**FIG. 16** is cross section of the variable area fan nozzle assembly shown in FIGS. 12-15 taken along line 16-16 in FIG. 14.

**FIG. 17** is a perspective view of a portion of another embodiment of a variable area fan nozzle assembly according to the invention with a translating ring segment in a deployed position.

**FIG. 18** is a top plan view of a portion of the variable area fan nozzle assembly shown in FIG. 17 showing translating ring segment in a deployed position on the left half side of the figure, and showing the translating ring segment in a stowed position on the right half side of the figure.

**FIG. 19** is a perspective view of a portion of an additional embodiment of a variable area fan nozzle assembly according to the invention with a translating ring segment in a deployed position.

**FIG. 20** is a top plan view of a portion of the variable area fan nozzle assembly shown in FIG. 19 showing translating ring segment in a deployed position on the left half side of the figure, and showing the translating ring segment in a stowed position on the right half side of the figure.

### DETAILED DESCRIPTION

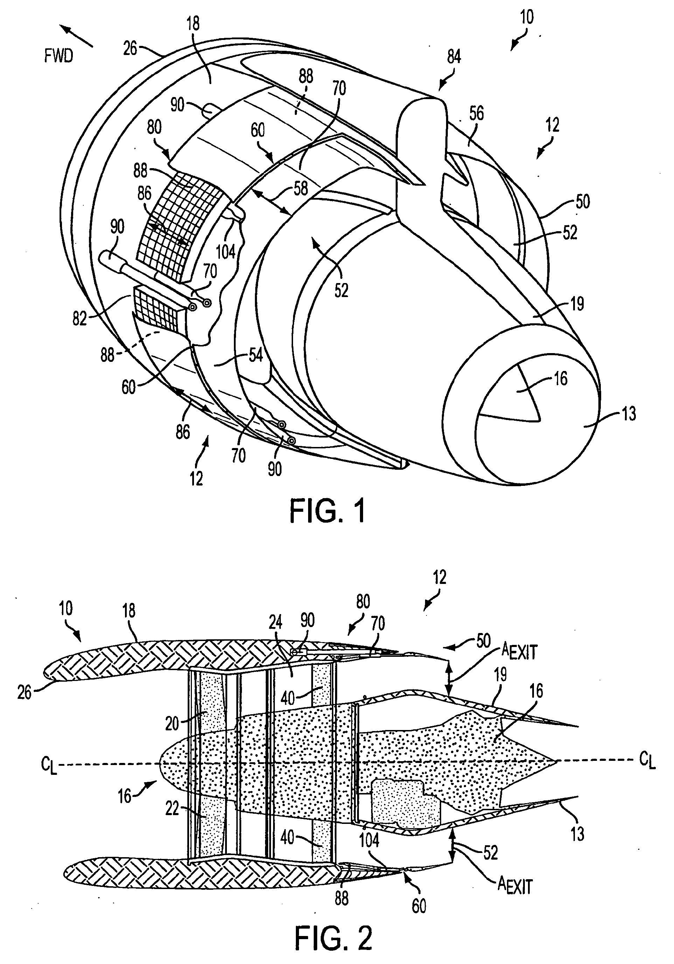

**FIGS. 1-8** show one embodiment of a translating variable area fan nozzle assembly (VAFN) for a turbofan engine **10.**

Referring to **FIGS. 1** and **2****,** the engine **10** includes a trailing edge fan nozzle assembly **12** having a translating nozzle **50** that can be selectively adjusted, for example, as the engine **10** operates under different flight conditions. As discussed above, such an adjustment can be used to optimize an engine's performance. As shown in **FIG. 2****,** the translating nozzle 50 can be selectively translated (i.e., moved fore and aft) to vary the fan nozzle's exit area **"Aₑₓᵢₜ"** in order to optimize engine performance, and as described in detail below, to adjust an amount of engine bypass flow spilled through an upstream exit **60** formed by the variable area fan nozzle assembly **12.** By bleeding or spilling off excess fan flow through the upstream exit **60** before the excess air flow reaches the primary fan nozzle exit **52,** lower fan pressure ratios for the same amount of delivered mass flow can be obtained, thereby increasing stall margins and avoiding engine malfunction and shutdown. For purposes of illustration, the variable area fan nozzle assembly **12** is shown in the context of a turbofan jet aircraft engine **10.** The engine **10** can be mounted to a wing or fuselage of an aircraft, for example, by a pylon or other similar support (not shown in the figures).

As shown in **FIG. 2****,** the engine **10** includes an engine core **16** and a stationary nacelle **18** surrounding the core **16.** The engine core **16** is housed within a core cowl **19.** The engine's fan **20** is positioned within an upstream portion of the nacelle **18,** and includes a plurality of fan blades **22** that are mounted on the engine's rotor (not shown). The fan blades **22** rotate about the engine's centerline **C_{L}** and draw a flow of air into an inlet end **26** of the engine **10.** An annular bypass duct **24** is defined between the engine core **16** and the nacelle **18.** The air flow drawn into the engine **10** is accelerated by the rotating fan blades **22,** and a portion of the incoming air flow is directed into and through the engine core **16.**

Bypass flow enters the upstream end of the nacelle **18** and flows around and past the engine core **16.** The bypass flow is accelerated by the rotating fan blades **22** and passes through the bypass duct **24** and past stators **40,** and exits the engine **10** through the variable area fan nozzle assembly **12.** The high-pressure heated exhaust gases from the combustion of the fuel and air mixture exit the engine core **16** through a primary exhaust nozzle **13** at the aft end of the engine **10.**

In the engine assembly **10** shown in **FIGS. 1-8****,** the translating nozzle **50** is a nozzle-like annular airfoil structure mounted at the trailing end of a cascade-type thrust reverser **80** that circumscribes the engine core cowl **19** immediately aft of the nacelle **18.** As shown in **FIG. 2****,** a downstream nozzle exit **52** between the trailing edge of the fan nozzle **50** and the core cowl **19** defines a fan nozzle exit area **"Aₑₓᵢₜ".** Due to the longitudinal variations in the diameter of the core cowl **19,** selective fore and aft movement of the translating nozzle **50** changes the size of the fan nozzle exit area **Aₑₓᵢₜ.** As shown in **FIG. 1****,** the fan nozzle **50** can include a first arcuate nozzle section **54** and a second arcuate nozzle section **56,** each nozzle section **54, 56** being axially translatable in the direction of the bidirectional arrow **58.** Translation of the translating nozzle **50** effects a desired size of the upstream exit **60** (shown in **FIG. 2**), and also varies the outlet geometry and effective exit area **Aₑₓᵢₜ** of the downstream nozzle exit **52.** Hence, when the translating nozzle **50** is deployed, there is an increase in the bypass flow that is discharged from the engine assembly **10** through both the upstream exit **60** and the enlarged downstream nozzle exit **52.** As shown in **FIGS. 1-3****,** the translating nozzle **50** can be selectively translated fore and aft by a plurality of linear nozzle actuators **70,** for example.

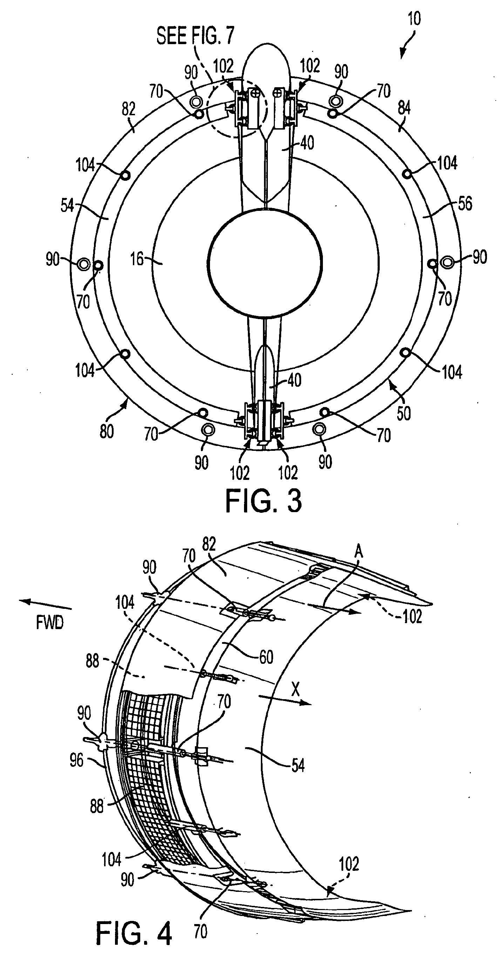

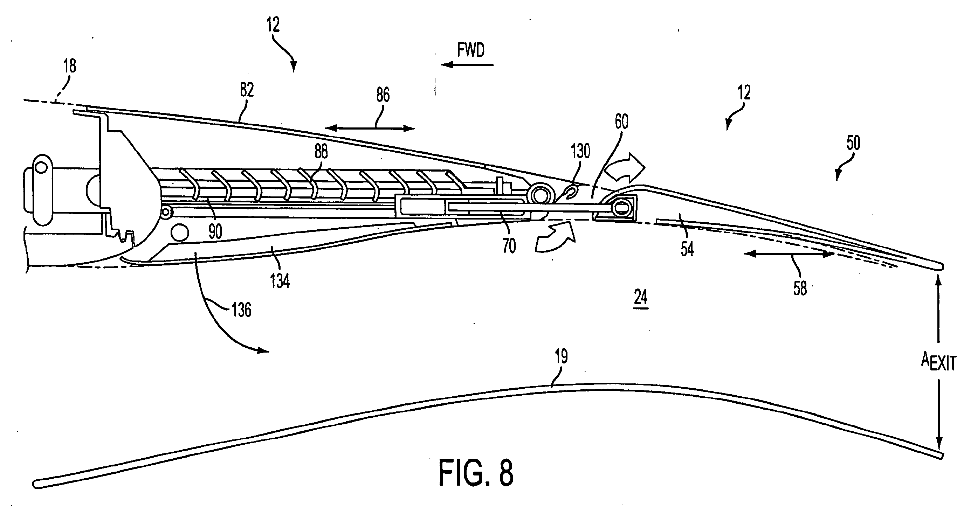

The cascade-type thrust reverser **80** can be positioned forward of the translating nozzle **50** in order to selectively block and redirect bypass flow from the bypass duct **24** in a manner known in the art. In **FIG. 1****,** the thrust reverser **80** and the translating nozzle **50** are both in their stowed positions. As shown in **FIG. 1****,** the thrust reverser **80** can include a first arcuate sleeve section **82** and an opposed second arcuate sleeve section **84** (shown in **FIG. 3****).** As indicated by bi-directional arrow **86** in **FIG. 1****,** the thrust reverser sleeve sections **82, 84** can be translated in the fore and aft directions by a plurality of spaced sleeve actuators **90.** In a stowed position, the thrust reverser sleeve sections **82, 84** cover an array of cascade vanes **88.** The cascade vanes **88** are indicated by dashed lead lines in **FIG 1** because they are not visible when the thrust reverser **80** is in its stowed position. Axial translation of the thrust reverser sleeve sections **82, 84** in the aft direction to a deployed position and deployment of a series of blocker doors **134** within the bypass duct **24** (as indicated by arrow **136** in **FIG. 8****)** causes bypass air flow to exit the bypass duct **24** through the cascade vanes **88** which turn the exiting flow in a generally forward direction to create reverse thrust.

**FIG. 3** is a partial section view of the aft end of the engine **10,** and illustrates one arrangement of the nozzle and sleeve actuators **70, 90,** respectively, around the periphery of the engine **10.** As shown in **FIG. 1****,** and more clearly in **FIG. 3****,** the sleeve half section **82** and the nozzle half-section **54** cooperate to generally define an approximately 180-degree sector of the combined thrust reverser and translating nozzle structure. Likewise, sleeve half section **84** and nozzle half section **56** cooperate to generally define an opposed approximately 180-degree sector of the thrust reverser and translating nozzle structure. Together, these approximate 180-degree sectors cooperate to define the complete thrust reverser/translating nozzle structure.

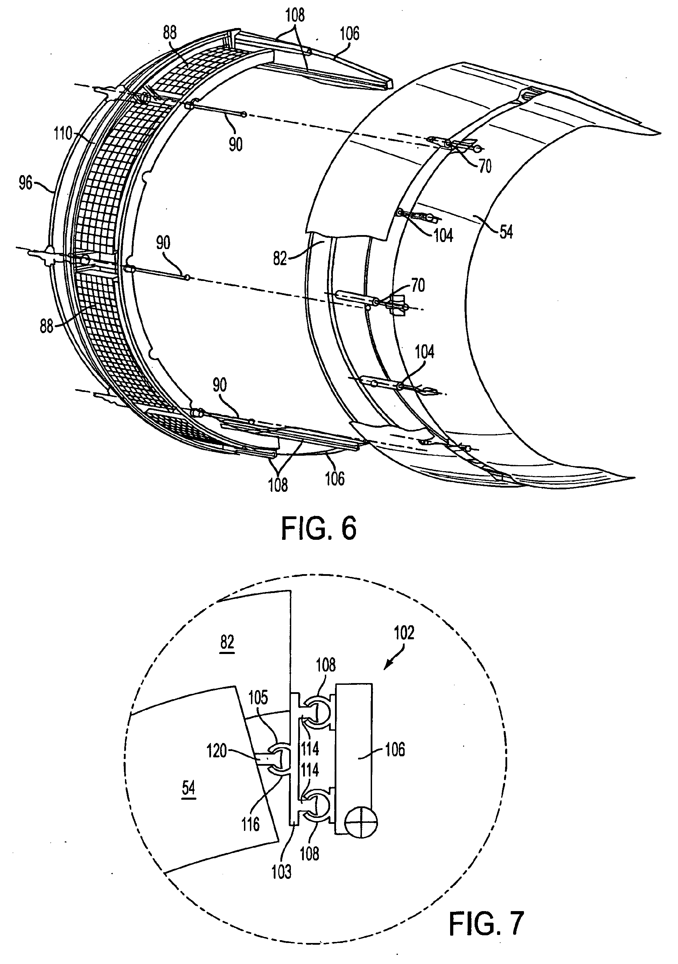

As shown in **FIGS. 1-3****,** the thrust reverser sleeve sections **82, 84** can each be selectively translated in the fore and aft directions by one or more circumferentially spaced sleeve actuators **90** that are connected to the nacelle **18.** In the embodiment shown, three actuators **90** are used for each sleeve half-section **82, 84.** As discussed above, each section **54, 56** of the translating nozzle **50** can be selectively translated by one or more circumferentially spaced nozzle actuators **70.** In the embodiment shown, each nozzle actuator **70** is disposed between a thrust reverser sleeve section **82, 84** and a respective fan nozzle section **54, 56.** The sleeve actuators **90** and the nozzle actuators **70** can be electrical, mechanical, pneumatic, hydraulic, or the like, and can be interconnected by appropriate power cables and conduits (not shown). The number and arrangement of nozzle and sleeve actuators **70, 90** can vary according to the thrust reverser and nozzle assembly configurations or other factors. As shown in **FIG. 3****,** the nozzle sections **54, 56** can be movably mounted on the engine **10** by upper and lower guide structures **102.** **FIG. 7** shows a detail view of one embodiment of a guide structure **102.** As shown in **FIGS. 1-3****,** guide tubes **104** can be mounted to the nacelle **18,** and can extend into the nozzle sections **54, 56** to stabilize the nozzle sections **54, 56** against undesirable translation and/or vibration. In addition or alternatively, guide tubes can be used to stabilize the thrust reverser sleeves **82, 84.**

The translating nozzle **50** can be a continuous nozzle (not shown in the figures), or as shown in **FIG. 3****,** can include two or more arcuate nozzle sections having airfoil profiles. The upstream exit **60** shown in **FIG. 2** is formed when the translating nozzle **50** is deployed in the aft direction away from the thrust reverser sleeve sections **82, 84,** and can have the form of a generally circular annular gap. Alternatively, the upstream exit **60** can have other non-circular shapes. The gap **60** between the nozzle sections **54, 56** and the sleeve sections **82, 84** can be continuous, or can be interrupted at one or more locations, such as, for example, at points of separation between nozzle segments **54, 56** of the translating nozzle **50.** As shown in **FIGS. 2-3****,** the bypass duct **24** can be interrupted at one or more locations by one or more stators **40,** or the like.

The translating nozzle **50** and surrounding structure are described below with reference to **FIGS. 4-7****.** In **FIGS. 4-7****,** elements that are obscured or partially obscured due to intervening elements are indicated by dashed lead lines.

**FIG. 4** is a partial view of one embodiment of a mounting structure for a first nozzle section **54** of the translating nozzle **50** and the corresponding, adjacent first sleeve section **82** of the thrust reverser **80.** The second nozzle section **56** of the translating nozzle **50** and the second sleeve section **84** of the thrust reverser **80,** which are shown in **FIGS. 1** and **3****,** can be mounted in a similar manner (not shown). In **FIG. 4****,** the thrust reverser **80** is in a stowed position, and the first sleeve section **84** covers an associated portion of the cascade vanes **88.** Also in **FIG. 4****,** the translating nozzle **50** is in an open or deployed position, and the upstream exit **60** is disposed between the first nozzle section **54** and the first sleeve section **84.** Rearward axial translation of the first nozzle section **54** from its stowed position to its deployed position is indicated in **FIGS. 4-5** by directional arrow **"X".** As shown in **FIG. 4****,** the nozzle actuators **70** can extend from the sleeve section **82** and across the upstream exit **60,** and can connect to a forward portion of the nozzle section **54.** The guide tubes **104** can also extend from the sleeve section **82** and across the upstream exit **60,** and can connect to a forward portion of the nozzle section **54.** A sleeve actuation cable **96** can interconnect two or more of the sleeve actuators **90** to power the actuators **90,** and/or to synchronize actuation of two or more actuators **90.**

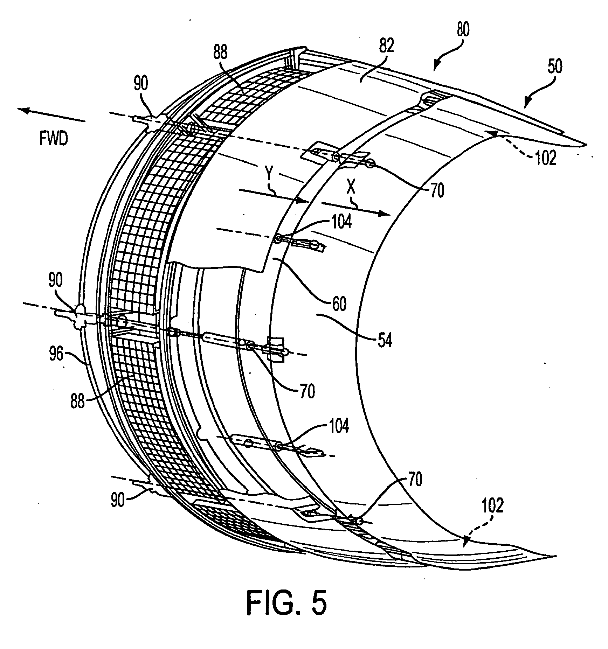

**FIG. 5** shows the first thrust reverser sleeve section **82** and the first translating nozzle section **54** in their deployed positions. Rearward axial translation of the first sleeve section **82** from its stowed position (as shown in **FIG. 4****)** to its deployed position (as shown in **FIG. 5****)** is indicated in **FIG. 5** by directional arrow **"Y".** Rearward translation of the sleeve section **82** exposes the cascade vanes **88** during operation of the thrust reverser **80.**

**FIG. 6** is an exploded view showing the first sleeve section **82** and its corresponding first nozzle section **54** separated from the cascades **88** and sleeve actuators **90.** As shown in **FIG. 6****,** one or more nozzle actuators **70** can movably connect the nozzle section **54** to the thrust reverser sleeve section **82.**

**FIG. 7** shows one embodiment of the upper or lower guide structures **102** for movably connecting a thrust reverser segment **82** and a nozzle section **54** to an engine **10.** Referring generally to **FIGS. 3** and **6** and particularly to **FIG. 7****,** the guide structure **102** can include a beam **106** that can be fixedly attached to a transverse bulkhead **110** on an aft end of a nacelle **18.** The beam **106** can include one or more longitudinally extending guide tracks **108.** A slide **103** can include one or more longitudinally extending track bars **114** that are slidably received within the guide tracks **108** of the fixed beam **106.** The slide **103** is connected to the thrust reverser sleeve section **82,** and thereby slidably connects the sleeve section to the beam **106.** The slide **103** can also include an axially extending track guide **116** in which a translating nozzle track bar **120** on the nozzle section **54** is slidably received, thus slidably connecting the nozzle section **54** to the nacelle **18.** Accordingly, the nozzle section **54** can axially translate as the track bar **120** slides within the track guide **116.** The nozzle section **54** is thereby slidably mounted with respect to the sleeve section **82** of the thrust reverser **80.** The translating sleeve section **82** and the track bar **120** can be actuated through conventional actuation means, such as mechanical, electric, hydraulic or pneumatic or other equivalent actuators, for example.

**FIG. 8** illustrates one method of operating the nozzle section **54** to bleed or spill off excess bypass flow through the upstream exit **60.** As described above, the sizes of the upstream exit **60** and the nozzle exit area **Aₑₓᵢₜ** can be varied in order to achieve different engine operating conditions. The upstream exit **60** acts as a "bleed" exit that diverts at least some bypass flow from the bypass duct **24.** **FIG. 8** shows a partial section of a downstream portion of the nozzle assembly **12,** and shows a portion of the bypass air flow (indicated by curved arrows) exiting the bypass duct **24** through the annular upstream exit **60** in one mode of operation of the nozzle assembly **12.** In **FIG. 8****,** the first nozzle section **54** of the translating nozzle **50** is rearwardly displaced from the first thrust reverser sleeve section **82** by its associated nozzle actuators **70.** The second nozzle section **56** can be similarly and simultaneously rearwardly displaced from the second thrust reverser sleeve section **84** by its associated nozzle actuators **70.** As shown in **FIG. 8****,** the thrust reverser **80** can include a plurality of blocker doors **134** that are pivotally connected to the first sleeve section **82** and swing in the direction of the curved arrow **136** to selectively block and redirect the bypass flow from the bypass duct **24** and through the cascade vanes **88** during thrust reverser operation.

Still referring to **FIG. 8****,** a high pressure seal **130** can be disposed between the thrust reverser sleeve section **82** and the first nozzle section **54,** such as on the trailing edge of the sleeve section **82,** for example. In certain modes of operation, when the sleeve section **82** and nozzle section **54** are drawn together, the seal **130** can operate to substantially seal any gap between the adjacent sleeve section **82** and nozzle section **54,** and thereby substantially prevent bypass air flow from passing between the sleeve section **82** and nozzle section **54.** Similarly, a seal **130** can be disposed between the second thrust reverser sleeve section **84** and the second nozzle section **56.** Alternatively, the seal **130** can be mounted on the leading edges of the nozzle sections **54, 56,** for example.

As discussed above, the nozzle and sleeve actuators **90, 70** can be mechanical, hydraulic, pneumatic or electric actuators, for example. In one embodiment, the nozzle actuator **70** is a constant opening air spring damper with hydraulic closing override, and the sleeve actuator **90** is an electric actuator. Alternatively or in addition, one or more of the actuators **70, 90** can be like an actuator described in U.S. Pat. No. 7,174,828 or in U.S. Pat. Application Publication No. 2008/0084130A1, both assigned to Goodrich Actuation Systems Ltd., for example, the disclosures of which are hereby incorporated by reference.

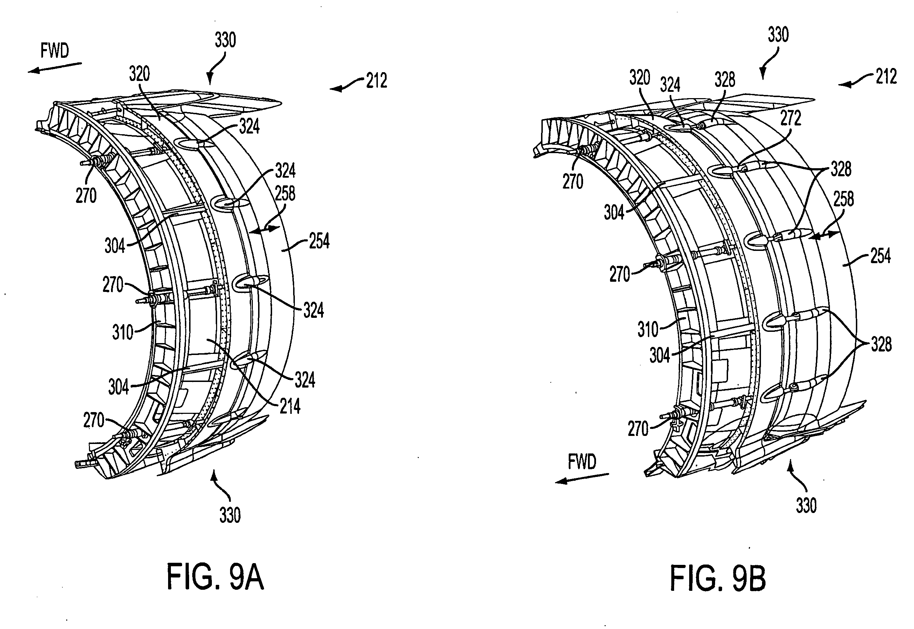

**FIGS. 9A-11** show a variable area nozzle assembly **212** for a turbofan engine having no cascade-type thrust reverser. The nozzle assembly **212** can be mounted to a nacelle **18** as generally illustrated in **FIG. 1****,** but with no intervening thrust reverser. Generally, elements shown in **FIG. 9A-11** that are analogous to elements shown in **FIGS. 1-8** have similar reference numerals preceded by a **"2"** or **"3."**

**FIGS. 9A** and **9B** are partial cutaway illustrations of a variable area nozzle assembly **212.** In the cutaway illustrations, a transverse bulkhead **310** and an outer duct structural liner **214** of an associated stationary nacelle are visible. The nozzle assembly **212** includes a translating nozzle assembly that includes two opposed nozzle sections, of which one nozzle section **254** is shown in **FIGS. 9A** and **9B****.** In **FIG. 9A****,** the nozzle section **254** is in a closed or stowed position, and in **FIG. 9B****,** the nozzle section **254** is in an open or deployed position.

The nozzle section **254** is mounted on the aft end of a stationary nacelle structure, such as to a transverse bulkhead **310.** Peripherally spaced nozzle actuators **270** can be attached to the bulkhead **310** at one end, and attached to a nozzle section **254** at their opposite ends. Guide tubes **304** can also be attached to the bulkhead **310** at one end, and attached to a nozzle section **254** at their opposite ends. The nozzle actuators **270** can act in unison to translate the nozzle section **254** in the direction of the bidirectional arrow **258.** Referring to **FIG. 9B****,** actuator shafts **272** of the nozzle actuators **270** can pass through an outer fairing **320** located forward of the nozzle section **254.** Upstream fairing **324** can be provided at the points where the actuator shafts **272** pass through the outer fairing **320** in order to reduce drag induced by the actuators **270.** Similarly, downstream fairing **328** can be provided at the points where the actuator shafts **272** pass through the nozzle section **254.**

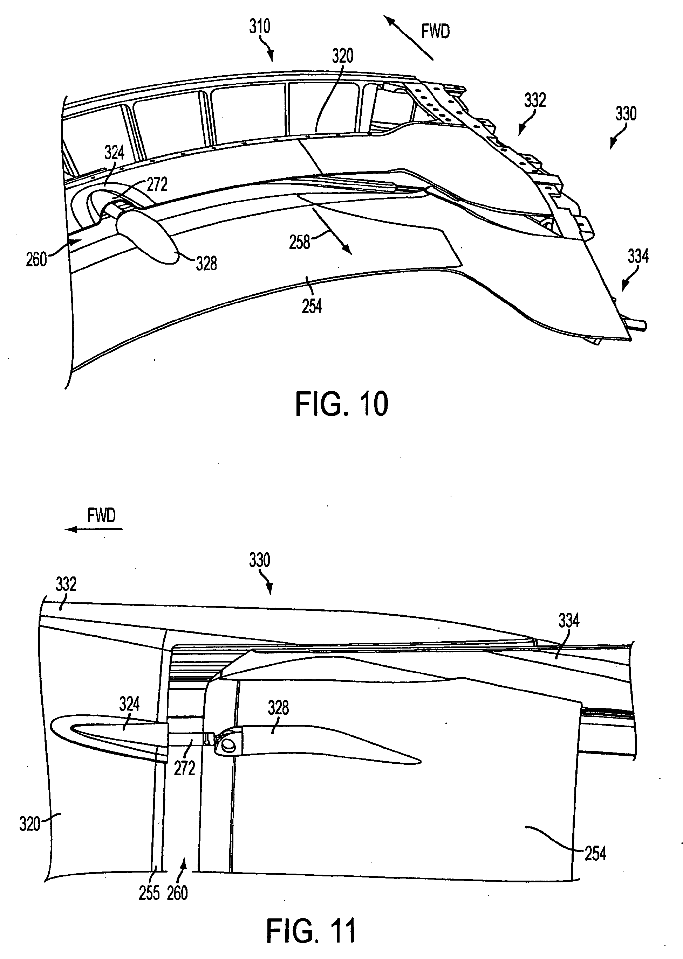

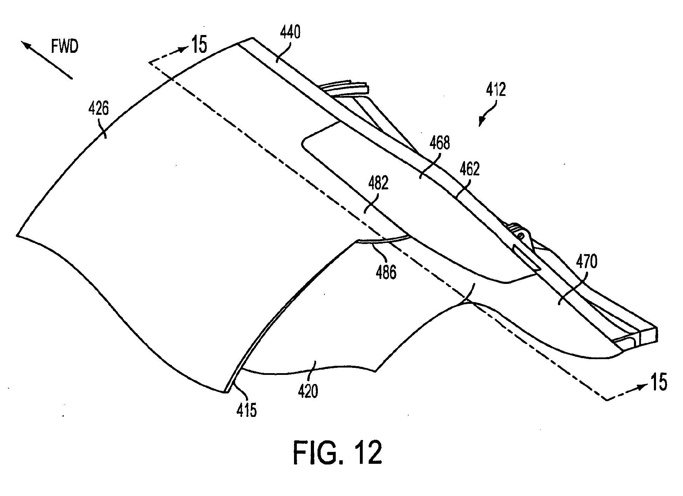

As shown in **FIG. 10****,** each end of each nozzle section **254** can terminate at a split beavertail fairing **330.** As shown in **FIGS. 10** and **11****,** each end of an outer fairing **320** of a nacelle can include an upstream portion **332** of a split beavertail fairing **330,** and each end of a translating nozzle section **254** can include a downstream portion **334** of the split beavertail fairing **330.** Rearward translation of the nozzle section **254** creates an upstream exit **260** between the nozzle section **254** and a trailing edge of the outer fairing **320,** and separates the upstream portion **332** and the downstream portion **334** of the split beavertail fairing **330,** thus forming an elongated gap **331.** As shown in **FIG. 11****,** a forward edge **255** of the nozzle section **254** can include an aerodynamic profile such as a bullnose profile or a teardrop profile, for example, to facilitate smooth air flow through the upstream exit **260,** and to minimize flow disruption caused by the actuator shafts **272,** or the like. **FIGS. 12**-**20** show various embodiments of nacelles with a translating variable area fan nozzle assemblies that are configured to substantially reduce such noise and enhance engine performance.

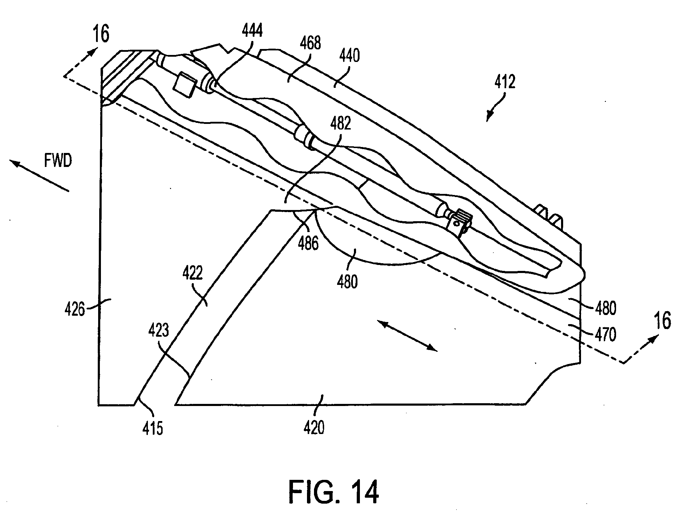

**FIGS. 12-16** show portions of a translating variable area nozzle assembly **412** mounted aft of a trailing edge **415** of a nacelle portion **426.** The nacelle portion **426** can be either a stationary forward nacelle cowl of an engine without a cascade-type thrust reverser (like that shown in **FIGS. 9A-9B****,** for example), or a movable thrust reverser sleeve section (like that shown in **FIG. 1****,** for example). A split beavertail fairing **462** includes an upstream fairing portion **468** on an end of a forward nacelle portion/thrust reverser sleeve section **426,** and a downstream fairing portion **470** on an end of a nozzle segment **420.** As shown in **FIG. 12****,** when the translating nozzle segment **420** is in a stowed position, the upstream fairing portion **468** and the downstream fairing portion **470** combine to form a substantially continuous and substantially smooth contoured outer surface. As discussed above, the beavertail fairing **462** covers the support and guide mechanism **440** that movably attaches the nozzle segment **420** to a nacelle. As shown in **FIG. 14****,** the beavertail fairing **462** also can cover an actuator **444** mounted adjacent to the guide mechanism **440,** or other adjacent components.

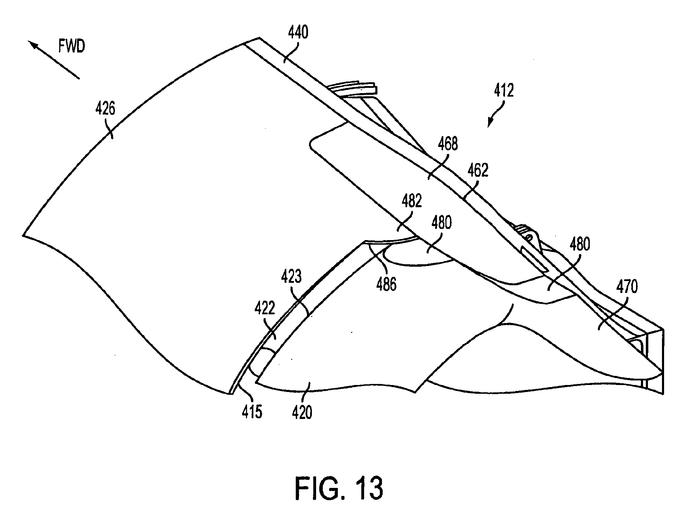

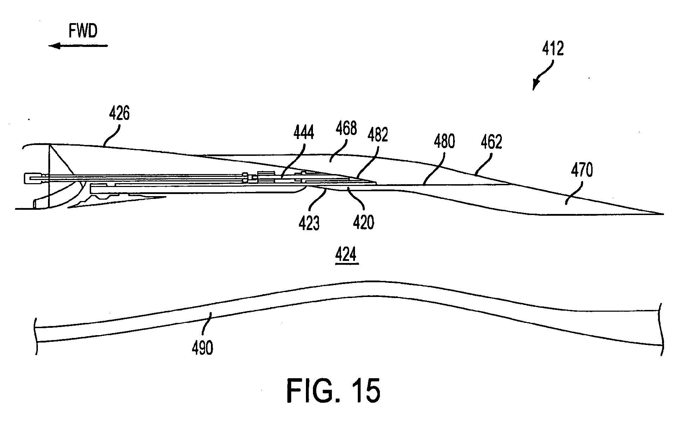

As shown in **FIG. 12****,** a projection **482** rearwardly extends from the trailing edge **415** of the nacelle portion **426,** and is positioned adjacent to the upstream fairing portion **468.** The projection **482** can include an edge **486** that aftwardly extends from the trailing edge **415** of the nacelle portion **426** toward an edge of the upstream fairing portion **468.** The edge **486** can be a curved edge as shown in the figures, an oblique straight edge, or can any other shape or profile. When the nozzle segment **420** is in the stowed position shown in **FIG. 12** and **FIG. 15****,** the projection **482** can at least partially overlap an upper surface of the nozzle segment **420** to form a substantially continuous and substantially smooth exterior surface. As shown in **FIGS. 13-16****,** the upstream beavertail fairing portion **468** and the projection **482** can be configured to abut and slide over a substantially flat opposed surface **480** on the nozzle segment **420.** Any gap between the forward beavertail fairing portion **468** and the surface **480** and between the projection **482** and the surface **480** can be minimized such that substantially no exiting bypass flow passes through such gap when the nozzle segment **420** is deployed.

The nozzle segment **420** is shown in a deployed position in **FIGS. 13****,** **14** and **16****.** In the deployed position, an upstream bypass flow exit **422** is formed between the trailing edge **415** of the nacelle portion **426** and a leading edge **423** of the nozzle segment **420.** The end of the upstream bypass flow exit **422** is bounded by the edge **486** of the projection **482.** The projection **482** serves to divert or deflect exiting bypass flow away from the beavertail split fairing **462** and away from components and structures that are covered by the fairing **462.** Accordingly, the projection **482** substantially prevents discharged bypass flow from passing through and around the split beavertail fairing **462** as bypass flow is discharged through the upstream exit **422.** As a result, noise and drag associated with discharged bypass flow in the proximity of the beavertail fairing **462** can be minimized, and engine performance can be enhanced. A projection **482** can be provided proximate to each end of each translating nozzle segment of the translating variable area nozzle assembly **412.**

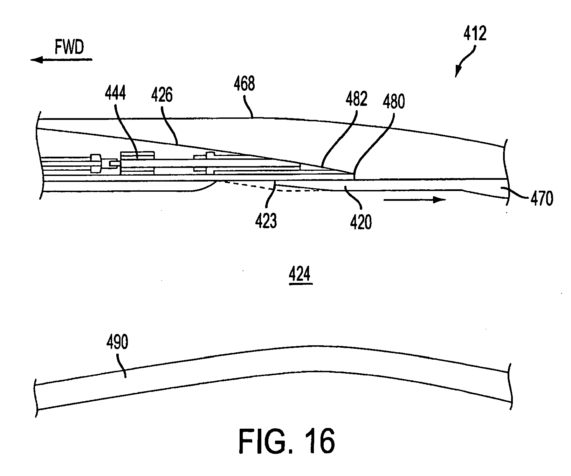

As shown in **FIG. 14****,** the forward beavertail fairing portion **468** can cover portions of the guide structure **440** and an actuator **444** mounted adjacent to the guide structure **440,** thereby shielding these components from external air flow when the nozzle segment **420** is in the stowed or deployed position. **FIG. 15** shows the relationship of the nacelle portion **426,** the forward beavertail fairing portion **468,** the nozzle segment **420,** and the aft beavertail fairing portion **470** when the nozzle segment **420** is in a stowed position. In this position, at least portions of the projection **482** and the forward beavertail fairing portion **468** overlap the surface **480** on the nozzle segment **420.** In the stowed position shown in **FIG. 15****,** the nacelle portion **426** and the nozzle segment **420** surround the core cowl **490,** and form the bypass flow duct **424** therebetween. In **FIG. 16****,** the nozzle segment **420** is shown in a deployed position, and the previously stowed position of the nozzle segment **420** is indicated by a dashed line. As shown in FIG. 16, at least a portion of the projection **482** can overlap the surface **480** on the nozzle segment **420** when the nozzle segment **420** is in the deployed position. The upstream exit **422** shown in **FIGS. 13** and **14** is not visible in the cross sectional view shown in **FIG. 16****.**

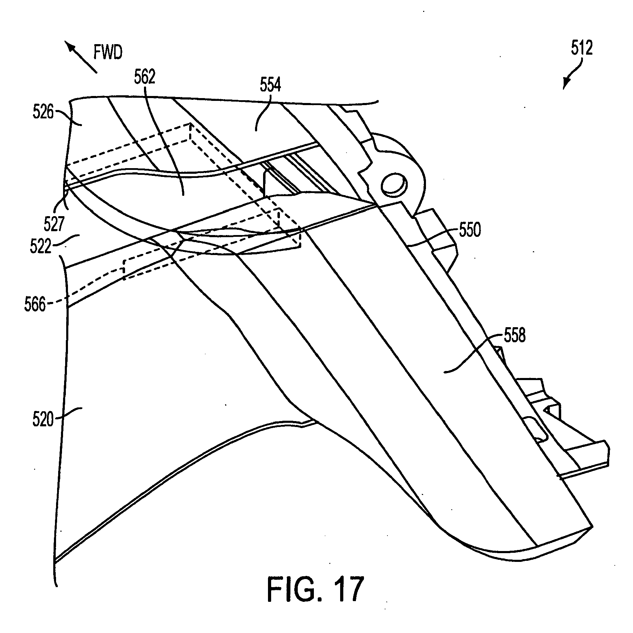

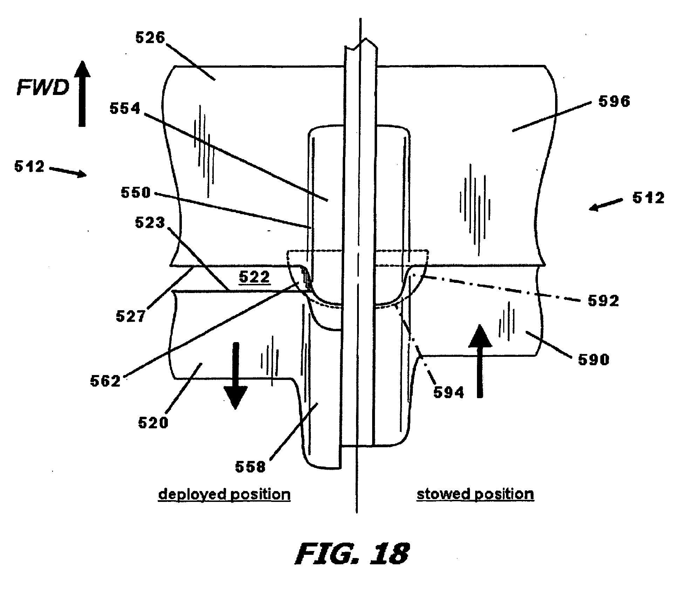

Another embodiment of a variable area nozzle assembly **512** is shown in **FIGS. 17-18****.** Again, the nozzle assembly **512** includes at least one translating nozzle segment **520,** and can be mounted aft of a nacelle portion **526** which can be either a thrust reverser sleeve or a stationary forward nacelle portion (as generally illustrated in **FIG. 1** and **FIGS. 9A** and **9B,** respectively). As shown in **FIG. 18****,** the variable area nozzle assembly **512** can include a first nozzle segment **520** and an opposed second nozzle segment **590,** and the second nozzle segment **590** can be a mirror image of the first nozzle segment **520.** Though the first and second nozzle segments **520, 590** are normally both stowed or both deployed at any one time, in **FIG. 18****,** the first nozzle segment **520** is shown in a deployed position on the left half side of the drawing, and the second nozzle segment **590** is shown in a stowed position on the right half side of the drawing for purposes of illustration only.

In the deployed position shown in **FIG. 17** and on the left half side of **FIG. 18****,** an upstream bypass flow exit **522** is formed between a leading edge **523** of the first nozzle segment **520** and an opposed trailing edge **527** of the nacelle portion **526.** A split beavertail fairing **550** can be located at each end of the first translating nozzle segment **520** (only one end of the first translating nozzle segment **520** is shown in **FIGS. 17-18****).** The split fairing **550** can include an upstream fairing portion **554** on the nacelle portion **526,** and a downstream fairing portion **558** on the translating nozzle segment **520.** Fore and aft translation of the translating nozzle segment **520** respectively closes and opens the upstream bypass flow exit **522.** A second translating nozzle segment **590** is shown in a closed or stowed position on the right half side of **FIG. 18****,** wherein a forward edge of the second nozzle segment **590** is proximate to a trailing edge of an adjacent nacelle portion 596.

As shown in **FIGS. 17-18****,** the nacelle portion **526** can include a deflector **562** that rearwardly extends from its trailing edge **527.** As shown in **FIG. 17****,** the corresponding translating nozzle segment **520** can include an opposed void **566,** such as a slot, a pocket, a recess, or the like for receiving portions of the deflector **562** as the translating nozzle segment **520** moves between its stowed and deployed positions. The void **566** can be sufficiently deep to receive the entire deflector **562** when the translating nozzle segment **520** is in its stowed position. For example, as shown on the right half side of **FIG. 18****,** aft portions of a second deflector **592** are received in an aligned void **594** in the second translating nozzle segment **590** when the second nozzle segment **590** is in its stowed position.

As shown in **FIG. 17****,** the deflector **562** occupies an area that otherwise would comprise an end portion of the upstream bypass flow exit **522** if the deflector **562** was absent. The deflector **562** substantially prevents discharged bypass flow from flowing through and around the split beavertail fairing **562** as the air is discharged from the upstream exit **522.** As a result, noise and drag associated with discharged bypass flow in the proximity of the beavertail fairing **562** can be minimized, and engine performance can be enhanced. Deflector **562, 592** can be provided on both ends of both translating nozzle segments **520, 590.**

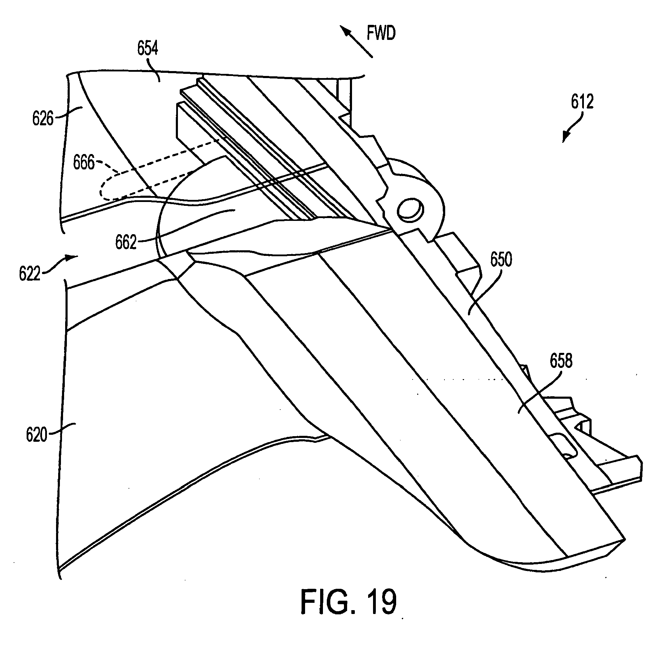

Another embodiment of a variable area nozzle assembly **612** is shown in **FIGS. 19-20****.** This nozzle assembly **612** can be substantially similar to the nozzle assembly **512** discussed above and shown in **FIGS. 17-18****,** except as described below.

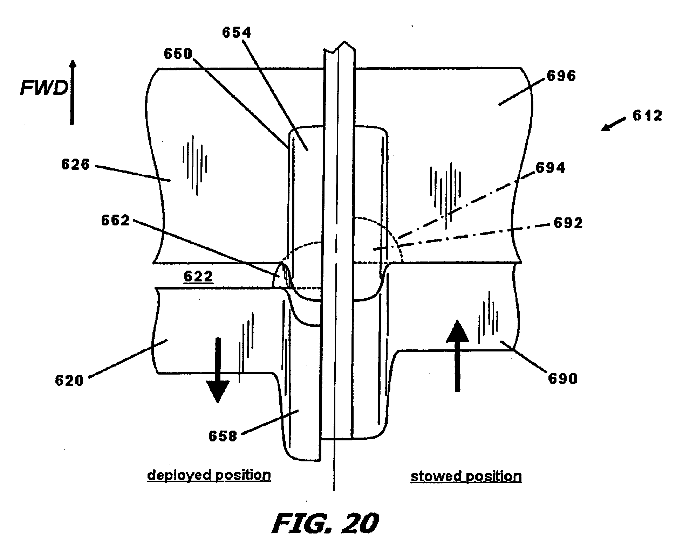

As shown in **FIG. 19****,** a translating nozzle segment **620** is movably disposed behind a trailing edge of a nacelle portion **626,** and selectively opens and closes an upstream bypass flow exit **622.** A split beavertail fairing **650** includes an upstream fairing portion **654** and a downstream fairing portion **658** disposed on respective opposed sides of the upstream exit **622.** As shown in **FIG. 20****,** the variable area nozzle assembly **612** can also include a second translating nozzle segment **690** (shown in a stowed position). In this embodiment, deflectors **662, 692** forwardly extend from the leading edges of the respective translating nozzle segments **620, 690.** As shown in **FIG. 19****,** opposing slots, pockets or recesses **666, 694** can be formed in the trailing edges of the thrust reverser sleeve/stationary forward nacelle portions **626, 696** to receive at least a portion of a respective deflector **662, 692** when the translating nozzle segments **620, 690** are in their deployed positions. As shown on the right half side of **FIG. 20****,** a slot, pocket or recess **694** can receive all or substantially all of a corresponding deflector **692** when the translating nozzle segment **690** is in its stowed position. Like the rearwardly extending deflectors **562, 592** described above, the forwardly extending deflectors **662, 692** substantially prevent bypass flow from exiting the upstream exit **622** in the vicinity of the split beavertail fairings **650** and other adjacent structures, and thereby minimize noise and drag associated with discharged bypass flow in this region.

Persons of ordinary skill in the art will understand that while the invention has been described in terms of various embodiments and various aspects and features, certain modifications, variations, changes and additions can be made to the described embodiments without departing from the spirit and scope of the invention. For example, a deflector could be attached to another adjacent structure, such as to a stationary portion of a guide mechanism or other support member at a location forward of a translating nozzle section. Such a stationary deflector could be configured to block the exit of bypass flow proximate to an end of a translating nozzle segment like the deflectors **562, 592, 662, 692** described above, and could be received within a slot, pocket or recess of a leading edge of a corresponding translating nozzle segment when the nozzle segment is in a stowed position. All such modifications, variations, changes and additions are intended to be within the scope of the appended claims.

## Claims

1. A variable area fan nozzle assembly (512, 612) for a turbofan engine (10), the assembly comprising:
(a) a nacelle (18) having an aft edge (527);
(b) a translating nozzle segment (520, 620) having a forward edge (523) and a first end, the nozzle segment (520, 620) being movably disposed behind the aft edge (527), wherein an upstream bypass flow exit (522, 622) is defined between the aft edge (527) and the forward edge (523) when the nozzle segment (520, 620) is in a deployed position;
(c) **characterised by** a deflector (482, 562, 662, 692) disposed between the aft edge (527) and the forward edge (523) proximate to the first end, wherein the end of the bypass flow exit (422, 522, 622) is bounded by an edge of the deflector, the deflector thereby substantially preventing bypass flow from exiting the upstream bypass flow exit in a region that is proximate to the first end.

2. A variable area fan nozzle assembly (512, 612) according to claim 1 wherein:
the aft edge (527) comprises an edge of a stationary forward nacelle portion (526, 626), or
the aft edge (5270 comprises an edge of a translatable thrust reverser sleeve (82, 84, 426).

3. A variable area fan nozzle assembly (512, 612) according to claim 1 wherein:
the deflector (482, 562, 662, 692) is affixed to the nacelle (18) and rearwardly extends from the aft edge (527), or
the deflector (482, 562, 662, 692) is affixed to the nozzle segment (520, 620) and forwardly extends from the forward edge (523).

4. A variable area fan nozzle assembly (512, 612) according to any of claims 1-2 wherein:
the deflector (482, 562, 662, 692) is affixed to the nacelle (18) and rearwardly extends from the aft edge (527);
and at least a portion of the deflector (482, 562, 662, 692) overlaps a portion of the nozzle segment (520, 620) when the nozzle segment (520, 620) is in the deployed position.

5. A variable area fan nozzle assembly (512, 612) according to any of claims 1-2 wherein:
the deflector (482, 562, 662, 692) is affixed to the nacelle and rearwardly extends from the aft edge; and
at least a portion of the deflector (482, 562, 662, 692) is received in a void in the nozzle segment when the nozzle segment is in the stowed position.

6. A variable area fan nozzle assembly (512, 612) according to any of claims 1-2 wherein at least a portion of the deflector (482, 562, 662, 692) is received in a void in the nacelle (18) when the nozzle segment (520, 620) is in the stowed position.

7. A variable area fan nozzle assembly (512, 612) according to claim 1, wherein:
(a) the nacelle (18) comprises a forward nacelle portion (626, 696) having an outer fairing (320) and the aft edge (527); the assembly (512, 612) further comprising:
(b) a split beavertail fairing (550, 650) comprising an upstream fairing portion (554, 654) on the outer fairing (320) of the forward nacelle portion (626, 696) and a downstream fairing portion (558, 658) on the first end of at least one nozzle segment (520, 620), wherein when the nozzle segment (520, 620) is in the stowed position, the upstream fairing portion (554, 654) and the downstream fairing portion (558, 658) combine to form a substantially continuous outer surface extending between the forward nacelle portion (626, 696) and the at least one nozzle segment (520, 620); and wherein
(c) the deflector (482, 562, 662, 692) is configured to substantially block air flow that exits the nacelle (18) through the upstream bypass flow exit (522, 622) from contacting the split beavertail fairing (550, 650) when the nozzle segment (520, 620) is in the deployed position.

8. A variable area fan nozzle assembly (512, 612) according to claim 7 wherein:
the forward nacelle portion (626, 696) is a stationary forward cowl; or
the forward nacelle portion (626, 696) is a translatable thrust reverser sleeve.

9. A variable area fan nozzle assembly (512, 612) according to claim 7 wherein:
the deflector (482, 562, 662, 692) is affixed to the forward nacelle portion (626, 696) and rearwardly extends from the aft edge (527); or
the deflector (482, 562, 662, 692) is affixed to the at least one nozzle segment (520, 620) and forwardly extends from the forward edge (523).

10. A variable area fan nozzle assembly (512, 612) according to claim 7 wherein:
the deflector (482, 562, 662, 692) is affixed to the forward nacelle portion (626, 696) and rearwardly extends from the aft edge (527); and
at least a portion of the deflector (482, 562, 662, 692) overlaps a portion of the at least one nozzle segment (520, 620) when the nozzle segment (520, 620) is in the deployed position.

11. A variable area fan nozzle assembly (512, 612) according to claim 7 wherein:
the deflector (482, 562, 662, 692) is affixed to the forward nacelle portion (626, 696) and rearwardly extends from the aft edge (527); and
at least a portion of the deflector (482, 562, 662, 692) is received in a void in the at least one nozzle segment (520, 620) when the nozzle segment (520, 620) is in the stowed position.

12. A variable area fan nozzle assembly (512, 612) according to claim 7 wherein:
the deflector (482, 562, 662, 692) is affixed to the at least one nozzle segment (520, 620) and forwardly extends from the forward edge (523); and
at least a portion of the deflector (482, 562, 662, 692) is received in a void (566, 594) in the forward nacelle portion (626, 696) when the at least one nozzle segment (520, 620) is in the stowed position.

13. A variable area fan nozzle assembly (512, 612) according to claim 7 wherein a gap (331) is formed between the upstream fairing portion (554, 654) and the downstream fairing portion (558, 658) when the nozzle segment (520, 620) is in the deployed position, and wherein the deflector (482, 562, 662, 692) is configured to substantially block air flow that exits the nacelle (18) through the upstream bypass flow exit (522, 622) from passing through the gap (331) when the nozzle segment (520, 620) is in the deployed position.

## Patentansprüche

1. Gebläsedüsenanordnung mit variabler Fläche (512, 612) für einen Mantelstromtriebwerksmotor (10), wobei die Anordnung Folgendes umfasst:
(a) eine Gondel (18) mit einer Hinterkante (527);
(b) ein Verlagerungsdüsensegment (520, 620) mit einer Vorderkante (523) und einem ersten Ende, wobei das Düsensegment (520, 620) beweglich hinter der Hinterkante (527) angeordnet ist, wobei ein vorgelagerter Bypassstromaustritt (522, 622) zwischen der Hinterkante (527) und der Vorderkante (523) definiert ist, wenn das Düsensegment (520, 620) in einer Ausfahrposition ist;
(c) **gekennzeichnet durch** einen Deflektor (482, 562, 662, 692), der zwischen der Hinterkante (527) und der Vorderkante (523) in der Nähe des ersten Endes angeordnet ist, wobei das Ende des Bypassstromaustritts (422, 522, 622) von einer Kante des Deflektors begrenzt ist, wobei der Deflektor auf diese Weise im Wesentlichen verhindert, dass der Bypassstrom aus dem vorgelagerten Bypassstromaustritt in einer Region in der Nähe des ersten Endes austritt.

2. Gebläsedüsenanordnung mit variabler Fläche (512, 612) nach Anspruch 1, wobei:
die Hinterkante (527) eine Kante eines stationären vorderen Gondelabschnitts (526, 626) umfasst, oder
die Hinterkante (5270 eine Kante einer verlagerbaren Schubumkehrhülse (82, 84, 426) umfasst.

3. Gebläsedüsenanordnung mit variabler Fläche (512, 612) nach Anspruch 1, wobei:
der Deflektor (482, 562, 662, 692) an der Gondel (18) befestigt ist und sich von der Hinterkante (527) nach hinten erstreckt, oder
der Deflektor (482, 562, 662, 692) an dem Düsensegment (520, 620) befestigt ist und sich von der Vorderkante (523) nach vorne erstreckt.

4. Gebläsedüsenanordnung mit variabler Fläche (512, 612) nach einem der Ansprüche 1-2, wobei:
der Deflektor (482, 562, 662, 692) an der Gondel (18) befestigt ist und sich von der Hinterkante (527) nach hinten erstreckt;
und wenigstens ein Abschnitt des Deflektors (482, 562, 662, 692) einen Abschnitt des Düsensegments (520, 620) überlagert, wenn das Düsensegment (520, 620) in der Ausfahrposition ist.

5. Gebläsedüsenanordnung mit variabler Fläche (512, 612) nach einem der Ansprüche 1-2, wobei:
der Deflektor (482, 562, 662, 692) an der Gondel (18) befestigt ist und sich von der Hinterkante nach hinten erstreckt; und
wenigstens ein Abschnitt des Deflektors (482, 562, 662, 692) in einer Leerstelle im Düsensegment aufgenommen ist, wenn das Düsenelement in der Stauposition ist.

6. Gebläsedüsenanordnung mit variabler Fläche (512, 612) nach Anspruch 1-2, wobei wenigstens ein Abschnitt des Deflektors (482, 562, 662, 692) in einer Leerstelle in der Gondel (18) aufgenommen ist, wenn das Düsenelement (520, 620) in der Stauposition ist.

7. Gebläsedüsenanordnung mit variabler Fläche (512, 612) nach Anspruch 1, wobei:
(a) die Gondel (18) einen vorderen Gondelabschnitt (626, 696) mit einer äußere Verkleidung (320) und der Hinterkante (527) umfasst; wobei die Anordnung (512, 612) ferner Folgendes umfasst:
(b) eine geteilte Heckverkleidung (550, 650), die einen vorgelagerten Verkleidungsabschnitt (554, 654) an der äußeren Verkleidung (320) des vorderen Gondelabschnitts (626, 696) und einen nachgelagerten Verkleidungsabschnitt (558, 658) am ersten Ende des wenigstens einen Düsensegments (520, 620) umfasst, wobei dann, wenn das Düsensegment (520, 620) in der Stauposition ist, der vorgelagerte Verkleidungsabschnitt (554, 654) und der nachgelagerte Verkleidungsabschnitt (558, 658) kombiniert eine im Wesentlichen kontinuierliche Außenfläche bilden, die sich zwischen dem vorderen Gondelabschnitt (626, 696) und dem wenigstens einen Düsensegment (520, 620) erstreckt; und wobei
(c) der Deflektor (482, 562, 662, 692) dazu konfiguriert ist, einen Luftstrom, der aus der Gondel (18) durch den vorgelagerten Bypassstromaustritt (522, 622) austritt, zu blockieren, damit dieser nicht in Kontakt mit der geteilten Heckverkleidung (550, 650) gelangt, wenn das Düsensegment (520, 620) in der Ausfahrposition ist.

8. Gebläsedüsenanordnung mit variabler Fläche (512, 612) nach Anspruch 7, wobei:
der vordere Gondelabschnitt (626, 696) eine stationäre vordere Triebwerksverkleidung ist; oder
der vordere Gondelabschnitt (626, 696) eine verlagerbare Schubumkehrhülse ist.

9. Gebläsedüsenanordnung mit variabler Fläche (512, 612) nach Anspruch 7, wobei:
der Deflektor (482, 562, 662, 692) am vorderen Gondelabschnitt (626, 696) befestigt ist und sich von der Hinterkante (527) nach hinten erstreckt; oder
der Deflektor (482, 562, 662, 692) an dem wenigstens einen Düsensegment (520, 620) befestigt ist und sich von der Vorderkante (523) nach vorne erstreckt.

10. Gebläsedüsenanordnung mit variabler Fläche (512, 612) nach Anspruch 7, wobei:
der Deflektor (482, 562, 662, 692) am vorderen Gondelabschnitt (626, 696) befestigt ist und sich von der Hinterkante (527) nach hinten erstreckt; und
wenigstens ein Abschnitt des Deflektors (482, 562, 662, 692) einen Abschnitt des wenigstens einen Düsensegments (520, 620) überlagert, wenn das Düsensegment (520, 620) in der Ausfahrposition ist.

11. Gebläsedüsenanordnung mit variabler Fläche (512, 612) nach Anspruch 7, wobei:
der Deflektor (482, 562, 662, 692) am vorderen Gondelabschnitt (626, 696) befestigt ist und sich von der Hinterkante (527) nach hinten erstreckt; und
wenigstens ein Abschnitt des Deflektors (482, 562, 662, 692) in einer Leerstelle in dem wenigstens einen Düsensegment (520, 620) aufgenommen ist, wenn das Düsenelement (520, 620) in der Stauposition ist.

12. Gebläsedüsenanordnung mit variabler Fläche (512, 612) nach Anspruch 7, wobei:
der Deflektor (482, 562, 662, 692) an dem wenigstens einen Düsensegment (520, 620) befestigt ist und sich von der Vorderkante (523) nach vorne erstreckt; und
wenigstens ein Abschnitt des Deflektors (482, 562, 662, 692) in einer Leerstelle (566, 594) im vorderen Gondelabschnitt (626, 696) aufgenommen ist, wenn das wenigstens eine Düsenelement (520, 620) in der Stauposition ist.

13. Gebläsedüsenanordnung mit variabler Fläche (512, 612) nach Anspruch 7, wobei ein Spalt (331) zwischen dem vorgelagerten Verkleidungsabschnitt (554, 654) und dem nachgelagerten Verkleidungsabschnitt (558, 658) gebildet ist, wenn das Düsensegment (520, 620) in der Ausfahrposition ist, und wobei der Deflektor (482, 562, 662, 692) dazu konfiguriert ist, einen Luftstrom, der aus der Gondel (18) durch den vorgelagerten Bypassstromaustritt (522, 622) austritt, zu blockieren, damit dieser nicht durch den Spalt (331) strömt, wenn das Düsensegment (520, 620) in der Ausfahrposition ist.

## Revendications

1. Ensemble (512, 612) de buse à jet plat à zone variable pour turboréacteur à double flux (10), l'ensemble comprenant :
(a) une nacelle (18) possédant un bord arrière (527) ;
(b) un segment (520, 620) de buse en translation possédant un bord avant (523) et une première extrémité, le segment (520, 620) de buse étant disposé de façon mobile derrière le bord arrière (527), dans lequel une sortie (522, 622) d'écoulement de dérivation amont est définie entre le bord arrière (527) et le bord avant (523) lorsque le segment (520, 620) de buse se trouve en position déployée ;
(c) **caractérisé par** un déflecteur (482, 562, 662, 692) disposé entre le bord arrière (527) et le bord avant (523) situé à proximité de la première extrémité, dans lequel l'extrémité de la sortie (422, 522, 622) d'écoulement de dérivation est borné par une extrémité du déflecteur, le déflecteur empêchant ainsi sensiblement l'écoulement de dérivation de sortir par la sortie d'écoulement de dérivation amont dans une région qui est proche de la première extrémité.

2. Ensemble (512, 612) de buse à jet plat à zone variable selon la revendication 1 dans lequel :
le bord arrière (527) comprend un bord d'une portion (526, 626) de nacelle avant fixe, ou
le bord arrière (5270 comprend un bord d'un manchon (82, 84, 426) inverseur de poussée déplaçable.

3. Ensemble (512, 612) de buse à jet plat à zone variable selon la revendication 1 dans lequel :
le déflecteur (482, 562, 662, 692) est fixé à la nacelle (18) et s'étend vers l'arrière depuis le bord arrière (527), ou
le déflecteur (482, 562, 662, 692) est fixé au segment (520, 620) de buse et s'étend vers l'avant depuis le bord avant (523).

4. Ensemble (512, 612) de buse à jet plat à zone variable selon l'une des revendications 1 et 2 dans lequel :
le déflecteur (482, 562, 662, 692) est fixé à la nacelle (18) et s'étend vers l'arrière depuis le bord arrière (527) ;
et au moins une partie du déflecteur (482, 562, 662, 692) recouvre une partie du segment (520, 620) de buse lorsque le segment (520, 620) de buse se trouve en position déployée.

5. Ensemble (512, 612) de buse à jet plat à zone variable selon l'une des revendications 1 et 2 dans lequel :
le déflecteur (482, 562, 662, 692) est fixé à la nacelle et s'étend vers l'arrière depuis le bord arrière ; et
au moins une partie du déflecteur (482, 562, 662, 692) est reçue dans un vide dans le segment de buse lorsque le segment de buse se trouve en position repliée.

6. Ensemble (512, 612) de buse à jet plat à zone variable selon l'une des revendications 1 et 2 dans lequel au moins une partie du déflecteur (482, 562, 662, 692) est reçue dans un vide dans la nacelle (18) lorsque le segment de buse (520, 620) se trouve en position repliée.

7. Ensemble (512, 612) de buse à jet plat à zone variable selon la revendication 1, dans lequel :
(a) la nacelle (18) comprend une partie (626, 696) de nacelle avant possédant un carénage extérieur (320) et le bord arrière (527) ; l'ensemble (512, 612) comprenant en outre :
(b) un carénage (550, 650) en queue de castor divisé comprenant une partie (554, 654) de carénage amont sur le carénage extérieur (320) de la partie (626, 696) de nacelle avant et une partie (558, 658) de carénage aval sur la première extrémité d'au moins un segment (520, 620) de buse, dans lequel lorsque le segment (520, 620) de buse se trouve en position repliée, la partie (554, 654) de carénage amont et la partie (558, 658) de carénage aval se combinent pour former une surface extérieure sensiblement continue s'étendant entre la partie (626, 696) de nacelle avant et l'au moins un segment (520, 620) de buse ; et dans lequel
(c) le déflecteur (482, 562, 662, 692) est configuré pour empêcher sensiblement l'écoulement d'air qui sort de la nacelle (18) à travers la sortie (522, 622) d'écoulement de dérivation amont d'entrer en contact avec le carénage (550, 650) en queue de castor divisé lorsque le segment (520, 620) de buse se trouve en position déployé.

8. Ensemble (512, 612) de buse à jet plat à zone variable selon la revendication 7 dans lequel :
la partie (626, 696) de nacelle avant est un capot avant fixe ; ou
la partie (626, 696) de nacelle avant est un manchon inverseur de poussée déplaçable.

9. Ensemble (512, 612) de buse à jet plat à zone variable selon la revendication 7 dans lequel :
le déflecteur (482, 562, 662, 692) est fixé à la partie (626, 696) de nacelle avant et s'étend vers l'arrière depuis le bord arrière (527) ; ou
le déflecteur (482, 562, 662, 692) est fixé à l'au moins un segment (520, 620) de buse et s'étend vers l'avant depuis le bord avant (523).

10. Ensemble (512, 612) de buse à jet plat à zone variable selon la revendication 7 dans lequel :
le déflecteur (482, 562, 662, 692) est fixé à la partie (626, 696) de nacelle avant et s'étend vers l'arrière depuis le bord arrière (527) ; et
au moins une partie du déflecteur (482, 562, 662, 692) recouvre une partie de l'au moins un segment (520, 620) de buse lorsque le segment (520, 620) de buse se trouve en position déployée.

11. Ensemble (512, 612) de buse à jet plat à zone variable selon la revendication 7 dans lequel :
le déflecteur (482, 562, 662, 692) est fixé à la partie (626, 696) de nacelle avant et s'étend vers l'arrière depuis le bord arrière (527) ; et
au moins une partie du déflecteur (482, 562, 662, 692) est reçue dans un vide dans l'au moins un segment (520, 620) de buse lorsque le segment (520, 620) de buse se trouve en position déployée.

12. Ensemble (512, 612) de buse à jet plat à zone variable selon la revendication 7 dans lequel :
le déflecteur (482, 562, 662, 692) est fixé à l'au moins un segment (520, 620) de buse et s'étend vers l'avant depuis le bord avant (523) ; et
au moins une partie du déflecteur (482, 562, 662, 692) est reçue dans un vide (566, 594) dans la partie (626, 696) de nacelle avant lorsque l'au moins un segment (520, 620) de buse se trouve en position repliée.

13. Ensemble (512, 612) de buse à jet plat à zone variable selon la revendication 7 dans lequel un interstice (331) est formé entre la partie (554, 654) de carénage amont et la partie (558, 658) de carénage aval lorsque le segment (520, 620) de buse se trouve en position déployée, et dans lequel le déflecteur (482, 562, 662, 692) est configuré pour empêcher sensiblement l'écoulement d'air qui sort de la nacelle (18) à travers la sortie (522, 622) d'écoulement de dérivation amont de passer à travers l'interstice (331) lorsque le segment (520, 620) de buse se trouve en position déployée.
